# EUROPÄISCHE PATENTANMELDUNG

(11) **EP 4 046 792 A1**
(43) Veröffentlichungstag der Anmeldung: **24.08.2022**
(21) Anmeldenummer: 22156629.2
(22) Anmeldetag: 14.02.2022
(51) Int. Cl.: B32B 7/02, B32B 27/08, B32B 27/10, B32B 27/30, B32B 27/36, B32B 27/40, B32B 29/00, B65D 65/00

(54) **RECYCLINGFÄHIGE VERPACKUNGSLAGENANORDNUNG MIT SAUERSTOFF- UND WASSERDAMPFBARRIERE, UMFASSEND EINE TRÄGERLAGE AUS PAPIER**

(30) Priorität: 18.02.2021 DE 102021103879
(71) Anmelder: Huhtamaki Flexible Packaging Germany GmbH & Co. KG, 87671 Ronsberg (DE)
(72) Erfinder: Wittmann, Franziska, 87435 Kempten (DE); Bäuerlein, Bastian, 87634 Obergünzburg (DE); Schäftner, Markus, 87634 Obergünzburg (DE); Wohlfahrt, Sarah, 81543 München (DE); Schmölz, Martin, 87647 Oberthingau (DE)
(74) Vertreter: Ruttensperger Lachnit Trossin Gomoll

(57) **Zusammenfassung**

Die vorliegende Erfindung betrifft eine Verpackungslagenanordnung (10) zur Herstellung eines Verpackungsbehälters, wobei die Verpackungslagenanordnung (10) umfasst:
- eine Papierlage (12) als Trägerlage,
- eine Sauerstoffbarrierelage (20) mit einer Sauerstofftransferrate von nicht mehr als 1,1 cm³/(m²·d·bar) gemäß DIN 53380-3, gemessen bei 23 °C und 50 % relativer Luftfeuchtigkeit,
- eine durch Vakuumabscheidung gebildete Metallisierungs-Barrierelagenanordnung (22),
wobei die Verpackungslagenanordnung (10) zusätzlich eine Wasserdampfbarrierelage (18) mit einer Wasserdampftransferrate von nicht mehr als 1,1 g/(m²·d) gemäß DIN EN ISO 15106-3, gemessen bei 38 °C und 90 % relativer Luftfeuchtigkeit, derart aufweist, dass die Sauerstoffbarrierelage (20) in der Lagenfolge (LF) zwischen der Wasserdampfbarrierelage (18) und der Metallisierungs-Barrierelagenanordnung (22) angeordnet ist.

## Beschreibung

Die vorliegende Erfindung betrifft eine Verpackungslagenanordnung mit sowohl einer vorbestimmten Mindest-Barrierewirkung gegenüber einer Migration von Sauerstoff als auch gegenüber einer Migration von Wasserdampf. Die Verpackungslagenanordnung soll zur Herstellung eines Verpackungsbehälters im ganz allgemeinen Sinn geeignet sein, also etwa zur Bildung eines Verpackungsbeutels. Es soll jedoch auch nicht ausgeschlossen sein, dass die vorliegende Verpackungslagenanordnung zum Einschlagen von zu verpackenden Produkten verwendet werden kann.

Die Verpackungslagenanordnung kann zu Beginn einer Herstellung einer Verpackung als Rollenware oder als wenigstens ein Bogen, insbesondere als Bogenstapel, zur Herstellung einer Verpackung vorliegen.

Aus der US 2005/0008800 A1, insbesondere aus deren Figur 3, ist eine Verpackungslagenanordnung zur Herstellung einer Verpackung von verderblichen Waren, wie beispielsweise Lebensmittel bekannt, welche an jeder ihrer außenliegenden Seiten je eine flüssigkeitsdichte Schicht aus Polyethylen (PE), Polypropylen (PP), Polyethylenterephthalat (PET) oder aus Copolymeren derselben aufweist. PE und PP als Schichtmaterial sind gemäß der US 2005/0008800 A1 wegen ihrer Bedruckbarkeit bevorzugt.

Die außenliegende Schicht auf der späteren Außenseite der mit der bekannten Verpackungslagenanordnung gebildeten Verpackung weist ein Auftragsgewicht im Bereich von 25 bis 45 g/m² auf, die außenliegende Schicht auf der späteren Innenseite ein Auftragsgewicht im Bereich von 25 bis 35 g/m².

Zwischen diesen außenliegenden Schichten weist die bekannte Verpackungslagenanordnung eine Trägerlage aus Papier auf. An die Papierlage schließt sich eine Haftvermittlerlage an, beispielsweise wiederum aus PP oder PE mit einem Auftragsgewicht von 5 bis 20 g/m². An die Haftvermittlerlage schließt sich eine zusätzliche Gas-Barrierelage aus beispielsweise EVOH oder PVOH an. An die zusätzliche Gas-Barrierelage schließt sich eine Aluminiumfolie als Haupt-Gas-Barrierelage an. Die zusätzliche Gas-Barrierelage ist vorgesehen, um eine barrieremindernde Auswirkung etwaiger Sprünge oder Risse in der Aluminiumfolie abzumildern.

Nachteilig an dieser bekannten Verpackungslagenanordnung ist ihre schwierige Entsorgbarkeit nach ihrem Gebrauch. Sie weist zahlreiche unterschiedliche Materialien auf, die nicht einfach zu trennen sind. Außerdem ist der gewichtsbezogene Aluminiumanteil an der Verpackungslagenanordnung relativ hoch, was die Herstellung der Verpackungslagenanordnung energieintensiv und damit teuer macht.

Aus der WO 97/38853 A1 ist ein mehrlagiges flexibles Verpackungsfolienlaminat als Verpackungslagenanordnung bekannt, umfassend eine konterbedruckte transparente Folie aus einem Polyolefin, Polyamid oder Polyester. Auf die Konterdrucklage ist ein Primer aufgetragen, um eine gute Haftung mit einer Gas-Barrierelage aus einem organischen Polymer, beispielsweise aus EVOH, PVOH oder PVDC, bereitzustellen. Auf die Gas-Barrierelage ist eine Metallisierungslage, genauer Aluminiumlage, durch Vakuumabscheidung aufgetragen. Auf die Metallisierungslage ist eine Heißsiegellage mittels eines gesonderten Haftvermittlers aufkaschiert. Als Beispiel für den Primer ist ein Polyurethan-basierter Primer genannt. Die Gas-Barrierelage wird aufextrudiert oder als Lösung oder Dispersion aufgetragen und dann ausgehärtet bzw. getrocknet.

Das aus der WO 97/38853 A1 bekannte Verpackungsfolienlaminat weist einen geringeren Aluminiumanteil auf als die vorgenannte Verpackungslagenanordnung, ist jedoch aufgrund der unterschiedlichen verwendeten Kunststoffe, insbesondere der konterbedruckten transparenten Folie und der Heißsiegellage, nur schwierig einem Recycling-Prozess zuzuführen.

Es ist Aufgabe der vorliegenden Erfindung, eine möglichst nachhaltige Verpackungslagenanordnung anzugeben, welche bei möglichst geringen Kosten und ausreichender Produktstabilität einfacher als der Stand der Technik erfolgreich einem Recycling-Prozess zugeführt werden kann.

Diese Aufgabe löst die vorliegende Erfindung durch eine Verpackungslagenanordnung, welche umfasst:
- eine Papierlage als Trägerlage,
- eine Sauerstoffbarrierelage mit einer Sauerstofftransferrate von nicht mehr als 1,1 cm³/(m²·d·bar), ermittelt gemäß DIN 53380-3 bei 23 °C und 50 % relativer Luftfeuchtigkeit, und
- eine durch Vakuumabscheidung gebildete Metallisierungs-Barrierelagenanordnung,
wobei die Verpackungslagenanordnung zusätzlich eine Wasserdampfbarrierelage mit einer Wasserdampftransferrate von nicht mehr als 1,1 g/(m²·d), ermittelt gemäß DIN EN ISO 15106-3 bei 38 °C und 90 % relativer Luftfeuchtigkeit, derart aufweist, dass die Sauerstoffbarrierelage in der Lagenfolge zwischen der Wasserdampfbarrierelage und der Metallisierungs-Barrierelagenanordnung angeordnet ist.

Die Papierlage als Trägerlage erlaubt eine hervorragende Rezyklierbarkeit. Durch Zerfaserung kann wenigstens der Faseranteil der Papierlage wiedergewonnen werden und kann erneut in eine Pulpe übergeführt und zu einem Fasermaterial verarbeitet werden. Sie ist daher besonders nachhaltig.

Mit dem Werkstoffbegriff "Papier" ist dabei jeder unter die Papier-Definition der DIN 6730 fallende Werkstoff bezeichnet. Die Papierlage weist bevorzugt ein Flächengewicht in einem Bereich von 30 bis 100 g/m² auf, um einerseits ausreichend Stabilität als Trägerlage der Verpackungslagenanordnung bereitzustellen und um andererseits ein zu hohes Gewicht der Verpackungslagenanordnung zu vermeiden.

Als besonders, aber nicht ausschließlich geeignetes Papier hat sich in Versuchen naturweißes transluzentes Pergaminpapier oder gestrichenes Papier mit sehr glatter und verdichteter Oberfläche erwiesen. Solches Papier verleiht der Verpackungslagenanordnung als Trägerlage ein solides Grundgerüst, welches die weiter genannten Schichten tragen kann.

Die Bildung der Metallisierungs-Barrierelagenanordnung Anordnung durch Vakuumabscheidung gestattet die Ausbildung einer besonders dünnen Metallisierungs-Barrierelagenanordnung, wobei deren Dicke durch den Prozess der Vakuumabscheidung besonders genau einstellbar ist.

Die Sauerstoffbarrierelage ergänzt funktionell die Gas-Barrierewirkung der Metallisierungs-Barrierelagenanordnung. Die Metallisierungs-Barrierelagenanordnung bildet vor allem eine Barriere gegenüber Wasserdampf, sodass die zusätzliche Sauerstoffbarrierelage im Verbund mit der Metallisierungs-Barrierelagenanordnung eine umfassende Barrierewirkung gegen eine Migration sowohl von Sauerstoff als auch von Wasserdampf durch die Verpackungslagenanordnung sorgt. Die Verpackungslagenanordnung ist somit zur Verpackung von sensiblen verderblichen Produkten geeignet.

Die bevorzugte unmittelbare Abscheidung der Metallisierungs-Barrierelagenanordnung auf die Sauerstoffbarrierelage verhindert, dass Sauerstoff unerwünschterweise die Metallisierungs-Barrierelagenanordnung lokal überwindet, etwa an einer Fehlstelle der Metallisierungs-Barrierelagenanordnung, und sich nach Migration durch die Metallisierungs-Barrierelagenanordnung in einer Materiallage ausbreiten kann.

Die zusätzliche Ausbildung und Anordnung einer Wasserdampfbarrierelage erhöht zum einen die Barrierewirkung der ebenfalls vornehmlich als Wasserdampfbarriere wirkenden Metallisierungs-Barrierelagenanordnung weiter, was es ermöglicht die Metallisierungs-Barrierelagenanordnung möglichst dünn auszubilden, ohne dadurch an Barrierewirkung an der Verpackungslagenanordnung insgesamt einzubüßen. Die Anordnung der Sauerstoffbarrierelage in der Lagenfolge zwischen der Wasserdampfbarrierelage und der Metallisierungs-Barrierelagenanordnung schützt die Sauerstoffbarrierelage, die abhängig von den zu ihrer Ausgestaltung verwendeten Werkstoffen feuchtigkeitssensitiv sein kann und bevorzugt sogar feuchtigkeitssensitiv ist. Die Anordnung der Sauerstoffbarrierelage zwischen der Wasserdampfbarrierelage und der Metallisierungs-Barrierelagenanordnung hält beiderseits Feuchtigkeit von der Sauerstoffbarrierelage fern, sodass die Sauerstoffbarrierelage stabil ist und bleibt und über lange Zeit ihre Wirkung entfalten kann.

Durch die Vakuumabscheidung der Metallisierungs-Barrierelagenanordnung kann wegen der dadurch möglichen dünnen und somit massearmen Ausbildung der Metallisierungs-Barrierelagenanordnung außerdem der Anteil an Nichtfaser-Fremdstoffen vorteilhaft gering gehalten werden, welcher beim Recycling der Verpackungslagenanordnung zusätzlich zu dem von der Papierlage stammenden Fasermaterial anfällt. Dies erleichtert wiederum das Recycling, da die Rückgewinnung des Fasermaterials der Papierlage möglichst wenig durch Nichtfaser-Fremdstoffe belastet und gestört wird.

Wenngleich es grundsätzlich denkbar ist, dass sich die Papierlage zwischen der Sauerstoffbarrierelage und der Metallisierungs-Barrierelagenanordnung befindet, ist zur Erzielung einer möglichst dünnen Verpackungslagenanordnung mit einer stabilen, durchgängig ausgebildeten Metallisierungs-Barrierelagenanordnung die Metallisierungs-Barrierelagenanordnung bevorzugt unmittelbar auf die Sauerstoffbarrierelage abgeschieden.

Die Metallisierungs-Barrierelagenanordnung kann gemäß einer ersten Ausführungsform eine durch Vakuumabscheidung gebildete Metalllage aus einem metallischen Werkstoff aufweisen oder aus einer solchen bestehen. Bevorzugt ist der metallische Werkstoff metallisches Aluminium, das sich als Barrierewerkstoff in der Verpackungstechnik bewährt hat.

Gemäß einer zweiten Ausführungsform kann die Metallisierungs-Barrierelagenanordnung eine durch Vakuumabscheidung gebildete Metalloxidlage aufweisen oder aus einer solchen bestehen. Besonders der Fall, dass die Metallisierungs-Barrierelagenanordnung nur wenigstens eine Metalloxidlage, jedoch keine Metalllage aufweist, erhöht aus einem unerwarteten Grund die praktische Rezyklierbarkeit der Verpackungslagenanordnung: eine optisch aufgrund ihres Glanzes sofort erkennbare Metalllage führt beim Verbraucher häufig dazu, dass er die nicht mehr benötigte Verpackung nicht in den Papiermüll entsorgt, wo eine aus der vorliegend beschriebenen Verpackungslagenanordnung gebildete Verpackung nach Gebrauch zur Zuführung zu einem geeigneten Recycling-Verfahren für Papierwerkstoffe hingehört. Eine im Wesentlichen transparente Metalloxidlage ist für den Verbraucher optisch nicht oder schlechter erkennbar und lässt die Papierlage als die Trägerlage der Verpackungslagenanordnung erkennen. Als Folge nimmt der Verbraucher die Verpackung zu Recht als Papierverpackung wahr und entsorgt sie entsprechend, was wiederum ihr erfolgreiches Recycling sicherstellt.

Gemäß einer dritten möglichen Ausführungsform kann die Metallisierungs-Barrierelagenanordnung sowohl eine durch Vakuumabscheidung gebildete Metalloxidlage als auch eine durch Vakuumabscheidung gebildete Metalllage aus einem metallischen Werkstoff aufweisen. Dann, wenn die Metallisierungs-Barrierelagenanordnung sowohl eine Metalllage als auch eine Metalloxidlage aufweist, ist das Metalloxid zur Erleichterung der Herstellung der Metallisierungs-Barrierelagenanordnung bevorzugt ein Oxid des Metalls der Metalllage. Bevorzugt ist die Metalloxidlage, unabhängig davon, ob sie die einzige Lage der Metallisierungs-Barrierelagenanordnung oder gemeinsam mit einer Metalllage gebildet ist, eine Aluminiumoxidlage.

Wenngleich daran gedacht sein kann, die Metallisierungs-Barrierelagenanordnung mit genau einer Metalllage und genau einer Metalloxidlage auszubilden, so ist es zur Erzielung einer Metallisierungs-Barrierelagenanordnung mit besonders hoher Barrierewirkung bei gleichzeitig möglichst geringer Dicke der Barrierelagenanordnung bevorzugt, dass die Metallisierungs-Barrierelagenanordnung eine Metalllage zwischen zwei Metalloxidlagen aufweist oder ist.

Bevorzugt ist die Metallisierungs-Barrierelagenanordnung zwischen 6 und 50 nm dick. Eine Metallisierungs-Barrierelagenanordnung im einstelligen Nanometer-Bereich oder im niedrigen zweistelligen Nanometer-Bereich kann durch eine reine Metalloxidlage erreicht werden. Bevorzugt weist die Metallisierungs-Barrierelagenanordnung eine Dicke im Bereich von 30 bis 50 nm auf, wobei dann, wenn die Metallisierungs-Barrierelagenanordnung eine Metalloxidlage aufweist, die Metalloxidlage bevorzugt eine Dicke von 2,5 bis 5 nm aufweist. Weist die Metallisierungs-Barrierelagenanordnung mehr als eine Metalloxidlage auf, weist vorzugsweise jede Metalloxidlage eine Dicke im Bereich von 2,5 bis 5 nm auf.

In optischer Dichte ausgedrückt, weist die Metallisierungs-Barrierelagenanordnung vorzugsweise einen Wert im Bereich von 2,0 bis 4,0, bevorzugt im Bereich von 2,2 bis 2,8, besonders bevorzugt bevorzugt 2,5 auf. Diese Angaben gelten für eine Metallisierungs-Barrierelagenanordnung mit einer metallischen Lage. Eine Metallisierungs-Barrierelagenanordnung mit nur einer oder mehreren Metalloxidlagen weist in der Regel eine optische Dichte von nicht mehr als 0,1 auf.

Wenngleich die Sauerstoffbarrierelage besonders stabil und dauerhaft aus Polyurethan oder auch aus Polyvinylidenchlorid gebildet sein kann, ist es im Hinblick auf die verbesserte Rezyklierbarkeit der Verpackungslagenanordnung bevorzugt, wenn die Sauerstoffbarrierelage wasserlöslich ist. Die wasserlösliche Sauerstoffbarrierelage kann durch Benetzung mit Wasser gelöst und so von der übrigen Verpackungslagenanordnung, insbesondere von der Papierlage entfernt werden. Vorteilhaft können mit dem Lösen der Sauerstoffbarrierelage die auf der der Papierlage abgewandten Seite der Sauerstoffbarrierelage gelegene wenigstens eine Lage, wie beispielsweise die Metallisierungs-Barrierelagenanordnung ebenfalls von der Papierlage entfernt werden. Im Ergebnis kann so der nicht-faserhaltige Fremdmaterialanteil beim Recycling der Papierlage weiter reduziert werden.

Polyurethan oder Polyvinylidenchlorid kann, bezogen auf das Gewicht, der Hauptbestandteil der Sauerstoffbarrierelage sein oder kann sogar, unter Vernachlässigung unvermeidlicher Verunreinigungen, der einzige Bestandteil der Sauerstoffbarrierelage sein. Die Sauerstoffbarrierelage kann, um wasserlöslich zu sein, bezogen auf das Gewicht, Vinylalkohol als Hauptbestandteil enthalten oder, unter Vernachlässigung unvermeidlicher Verunreinigungen, aus Vinylalkohol bestehen. Als Vinylalkohol kommen beispielsweise Polyvinylalkohol und Ethylenvinylalkohol infrage.

Die Sauerstoffbarrierewirkung in Gestalt der Sauerstofftransferrate der Sauerstoffbarrierelage wird gemäß der DIN 53380-3 ermittelt, und zwar bei 23 °C und 50 % relativer Luftfeuchtigkeit. Die oben genannte Sauerstofftransferrate ist eine Mindestanforderung an die Sauerstoffbarrierelage und als solche eine Obergrenze. Bevorzugt weist die Sauerstoffbarrierelage eine Sauerstofftransferrate von nicht mehr als 1,0, stärker bevorzugt von nicht mehr als 0,8 cm³/(m²·d·bar) auf, um eine Oxidation eines von der Verpackungslagenanordnung umgebenen Produkts möglichst lange zu verhindern oder hinauszuzögern.

Zur weiteren Dickenreduzierung der Verpackungslagenanordnung ist die Sauerstoffbarrierelage bevorzugt als Primer-Beschichtung aufgetragen ist, vorzugsweise als Dispersion oder Lösung. Die Sauerstoffbarrierelage kann durch Extrusion aufgetragen sein oder kann aufgedruckt oder mit einer Walze aufgetragen sein. In jedem Fall wird die Sauerstoffbarrierelage bevorzugt nass aufgetragen und anschließend an den Auftrag getrocknet.

Die Sauerstoffbarrierelage weist bevorzugt ein im getrockneten, einsatzbereiten Zustand gemessenes Auftragsgewicht von 0,9 bis 5,5 g/m² auf.

Die Wasserdampfbarrierelage kann ein Acrylcopolymer oder einen Polyester als Hauptbestandteil enthalten oder kann, unter Vernachlässigung unvermeidlicher Verunreinigungen, aus einem Acrylcopolymer oder einem Polyester bestehen.

Auch die Wasserdampfbarrierelage ist zu Erzielung einer möglichst dünnen Ausbildung als Primer-Beschichtung aufgetragen, vorzugsweise als Dispersion oder Lösung. Die Wasserdampfbarrierelage kann durch Extrusion aufgetragen sein oder kann aufgedruckt oder mit einer Walze aufgetragen sein. Die Wasserdampfbarrierelage wird bevorzugt nass aufgetragen und anschließend getrocknet.

Die Wasserdampfbarrierelage weist bevorzugt mit ein im getrockneten, einsatzbereiten Zustand gemessenes Auftragsgewicht von 0,9 bis 3,3 g/m² auf. Gemäß einer bevorzugten Ausführungsform ist die Wasserdampfbarrierelage unmittelbar, also ohne Anordnung einer Zwischenschicht, auf die Papierlage aufgetragen.

Die Wasserdampfbarrierewirkung in Gestalt der Wasserdampftransferrate der Wasserdampfbarrierelage wird gemäß der DIN EN ISO 15106-3 ermittelt, und zwar bei 38 °C und 90 % relativer Luftfeuchtigkeit. Die oben genannte Wasserdampftransferrate ist eine Mindestanforderung an die Wasserdampfbarrierelage und als solche eine Obergrenze. Bevorzugt weist die Wasserdampfbarrierelage eine Wasserdampftransferrate von nicht mehr als 1,0, stärker bevorzugt von nicht mehr als 0,8 g/(m²·d) auf, um eine Befeuchtung eines von der Verpackungslagenanordnung umgebenen Produkts möglichst lange zu verhindern oder hinauszuzögern.

Gemäß einer ersten Ausführungsform der Verpackungslagenanordnung können die Wasserdampfbarrierelage, die Sauerstoffbarrierelage und die Metallisierungs-Barrierelagenanordnung auf derselben Seite der Papierlage angeordnet sein. In diesem Falle ist bevorzugt die Wasserdampfbarrierelage unmittelbar auf die Papierlage aufgetragen, die Sauerstoffbarrierelage unmittelbar auf die Wasserdampfbarrierelage und die Metallisierungs-Barrierelagenanordnung ist bevorzugt auf die Sauerstoffbarrierelage vakuumabgeschieden. So wird ein sehr kompakter Lagenaufbau erhalten, bei dem vor allem die Sauerstoffbarrierelage für Feuchtigkeit aus der umgebenden Atmosphäre nahezu unerreichbar ist.

Alternativ kann die Papierlage zwischen der Wasserdampfbarrierelage und der Sauerstoffbarrierelage angeordnet sein, was zu einer vorteilhaft geringen Anzahl an Lagen in der Verpackungslagenanordnung führen kann. Dies wird nachfolgend erläutert.

Grundsätzlich kann die Verpackungslagenanordnung nur aus den oben genannten Lagen bestehen. Die Anordnung weiterer Lagen ist jedoch nicht ausgeschlossen.

Ein weiterer Vorteil der Papierlage ist ihre einfache und gute Bedruckbarkeit. So kann durch Druckauftrag, insbesondere Mehrfarben-Druckauftrag, Produktinformation auf eine durch die Verpackungslagenanordnung gebildete Verpackung für den Verbraucher leicht wahrnehmbar aufgebracht sein.

Zusätzlich zu den oben genannten Lagen: Papierlage, Wasserdampfbarrierelage, Sauerstoffbarrierelage und Metallisierungs-Barrierelagenanordnung kann die Verpackungslagenanordnung eine weitere Materiallage aufweisen. Bevorzugt ist diese weitere Materiallage eine außenliegende Materiallage, also eine Materiallage, welche mit einer Seite zur Umgebung hin freiliegt. Die Papierlage ist zwischen der weiteren Materiallage und der Metallisierungs-Barrierelagenanordnung angeordnet. Die weitere Materiallage bildet bevorzugt eine vom verpackten Produkt wegweisende Seite einer aus der Verpackungslagenanordnung gebildeten Verpackung.

Dann, wenn die Papierlage bedruckt ist, ist die weitere Materiallage bevorzugt eine Schutzlackschicht, welche den Druckfarbenauftrag bedeckt und dadurch vor äußeren Einflüssen, insbesondere vor mechanischem Abrieb schützt. In der oben genannten Ausführungsalternative, gemäß welcher die Papierlage zwischen der weiteren Materiallage und der Metallisierungs-Barrierelagenanordnung angeordnet ist, kann zur Reduzierung der Anzahl an Lagen in der Verpackungslagenanordnung die Wasserdampfbarrierelage die nach außen freiliegende Materiallage der Verpackungslagenanordnung bilden, welche insbesondere einen Druckfarbenauftrag bedeckt und schützt. Die Wasserdampfbarrierelage ist in diesem Fall die Schutzlackschicht. Die Schutzlackschicht kann ganz allgemein aus Nitrozellulose, Polyurethan, Polyester oder/und einem Acrylcopolymer gebildet sein, um nur einige Beispiele zu nennen. Bevorzugt weist die Schutzlackschicht ein im trockenen, einsatzbereiten Zustand gemessenes Auftragsgewicht im Bereich von 0,4 bis 2,2 g/m² auf.

Zusätzlich oder alternativ kann die Verpackungslagenanordnung eine weitere Decklage aufweisen, wobei die Metallisierungs-Barrierelagenanordnung zwischen der Papierlage und der Decklage angeordnet ist. Der Begriff "Decklage" ist grundsätzlich nur zur sprachlichen Unterscheidung von der weiteren Materiallage gewählt. Dennoch bildet auch die Decklage bevorzugt eine an der Verpackungslagenanordnung außenliegende Lage, welche mit einer Seite zur Umgebung freiliegt. Wenngleich auch die Metallisierungs-Barrierelagenanordnung eine außenliegende Lage der Verpackungslagenanordnung bilden kann, so kann die Decklage dennoch zum einen die Barrierewirkung der Metallisierungs-Barrierelagenanordnung weiter erhöhen oder/und kann eine Siegelbarkeit der Verpackungslagenanordnung gewährleisten. Die Decklage bildet bevorzugt eine an der aus der Verpackungslagenanordnung gebildeten Verpackung zum verpackten Produkt hinweisende Innenseite.

Die Decklage kann aus unterschiedlichen Materialien gebildet sein, beispielsweise aus dem oben bereits erwähnten Acrylcopolymer, aus einem Polyolefin, wie Polyethylen oder Polypropylen, aus Ethylenvinylazetatcopolymer oder aus Biopolymer, welches als Lösung oder Dispersion aufgetragen ist. Das Biopolymer kann ausgewählt sein aus PLA (Polymilchsäure), PBS (Polybutylensuccinat), PBAT (Polybutylenadipat-terephthalat), PBSA (Polybutylensuccinat-adipat), PHA (Polyhydroxyalkanoat), PGA (Polyglykolsäure), PEF (Polyethylenfurandicarboxylat), PVOH, Bio-PET, Bio-PE und Bio-PP.

Die Verpackungslagenanordnung kann eine zweite Wasserdampfbarrierelage aufweisen, welche gemäß der obigen Beschreibung der dort genannten, dann ersten Wasserdampfbarrierelage ausgebildet und aufgetragen sein kann. Die zweite Wasserdampfbarrierelage, deren Wasserdampftransferrate in dem oben für die erste Wasserdampfbarrierelage offenbarten Bereich liegt, ist bevorzugt auf der von der Papierlage abgewandten Seite der Metallisierungs-Barrierelagenanordnung angeordnet. Aus Gründen einer möglichst effektiven, aber dünnen Wasserdampfbarriere ist die zweite Wasserdampfbarrierelage im Falle ihres Vorsehens bevorzugt unmittelbar auf die Metallisierungs-Barrierelagenanordnung aufgetragen.

Zur Erzielung einer möglichst dünnen aber wirksamen Verpackungslagenanordnung, kann diese nur die oben genannten Lagen aufweisen.

Für eine gute Rezyklierbarkeit ist ein masse- oder gewichtsmäßig besonders dominanter Anteil und ein bezogen auf diesen dominanten Anteil möglichst geringer Anteil an Fremdstoffen vorteilhaft. Aus diesem Grunde weist bevorzugt keine einzelne Lage der Verpackungslagenanordnung ein größeres Flächengewicht auf als die Papierlage. Für den besonders bevorzugten Fall einer wasserlöslichen Sauerstoffbarrierelage, für welchen alle in Richtung von der Papierlage weg auf die Sauerstoffbarrierelage folgenden weiteren Lagen problemlos von der Verpackungslagenanordnung entfernt werden können, kann die Papierlage wenigstens in einem Teillagenverbund, welcher von einer der Papierlage näher als der Metallisierungs-Barrierelagenanordnung gelegenen Außenseite der Verpackungslagenanordnung bis einschließlich zur Metallisierungs-Barrierelagenanordnung reicht, einen Anteil von wenigstens 95 Gew.-% an dem Gesamtgewicht des Teillagenverbunds aufweisen. Bevorzugt weist die Papierlage in der gesamten Verpackungslagenanordnung einen Anteil von wenigstens 95 Gew.-% am Gesamtgewicht der Verpackungslagenanordnung auf. Die Grenze von 95 Gew.-% bildet in vielen Rechtsverordnungen, betreffend ein Verpackungsrecycling, die Grenze, bei deren Überschreiten eine aus mehreren Lagen gebildete Verpackungslagenanordnung als Monomaterial gilt und bei der Sekundärrohstoffverwertung wie ein Monomaterial behandelt werden darf. Die Verpackungslagenanordnung gilt dann als nur aus dem Material mit dem Gewichtsanteil von wenigstens 95 % bestehend und wird entsprechend einem für dieses Material angepassten Recyclingprozess zugeführt. Dieses Material ist vorliegend bevorzugt das Papier der Papierlage.

In unterschiedlichen Rechtsordnungen können unterschiedliche Grenzwerte für die Klassifizierung eines Verpackungsmaterials als Monomaterial gelten, wobei derzeit das 95 Gew.-%-Kriterium das strengste Kriterium ist und daher seine Erfüllung die Voraussetzung zur Klassifizierung als Monomaterial in den meisten oder sogar allen Rechtsordnungen erfüllt.

In der vorliegenden Anmeldung angegebenen Referenzen auf Normen und Vorschriften beziehen sich auf die Normen und Vorschriften in der am Anmeldetag geltenden Fassung.

Die vorliegende Erfindung betrifft auch eine aus der oben beschriebenen Verpackungslagenanordnung gebildete Verpackung, insbesondere Lebensmittelverpackung.

Die vorliegende Erfindung wird nachfolgend anhand der beiliegenden Zeichnungen näher erläutert. Es stellt dar:
- Fig. 1: eine grobschematische Querschnittsansicht einer ersten Ausführungsform einer erfindungsgemäßen Verpackungslagenanordnung,
- Fig. 2: eine grobschematische Querschnittsansicht einer zweiten Ausführungsform einer erfindungsgemäßen Verpackungslagenanordnung,
- Fig. 3: eine grobschematische perspektivische Ansicht einer mit der Verpackungslagenanordnung der ersten oder der zweiten Ausführungsform gebildeten Verpackung.

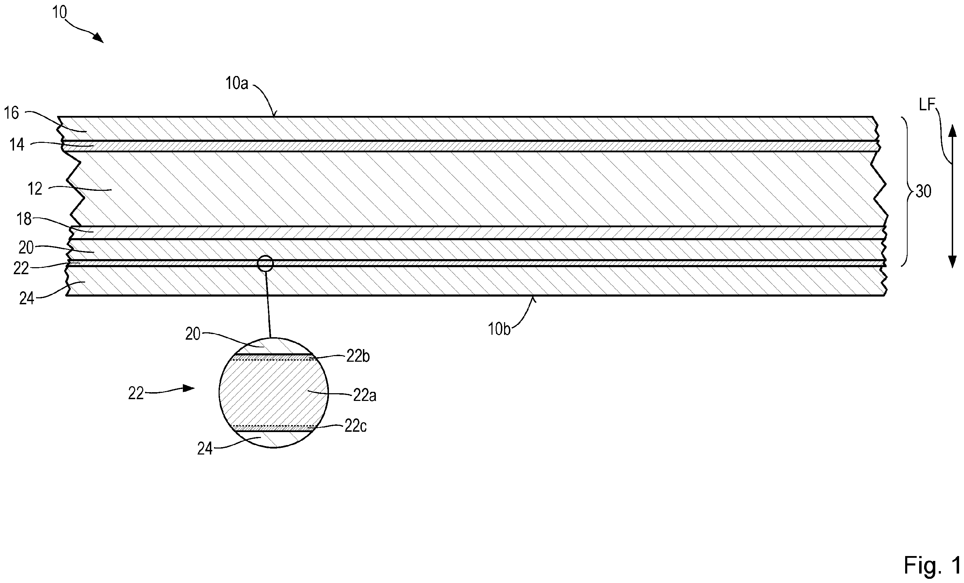

In Figur 1 ist eine erste erfindungsgemäße Ausführungsform einer Verpackungslagenanordnung der vorliegenden Anmeldung grobschematisch im Querschnitt dargestellt und mit 10 bezeichnet. In dem ersten Ausführungsbeispiel weist die Verpackungslagenanordnung 10 eine Papierlage 12 auf, deren Flächengewicht bevorzugt von keiner anderen Lage der Verpackungslagenanordnung 10 betragsmäßig übertroffen wird. Die Papierlage 12 bildet die Trägerlage der Verpackungslagenanordnung 10.

Die Darstellung der Verpackungslagenanordnung 10 in Figur 1 ist ausdrücklich nicht maßstäblich, insbesondere was die Darstellung der Dicken der einzelnen Lagen betrifft.

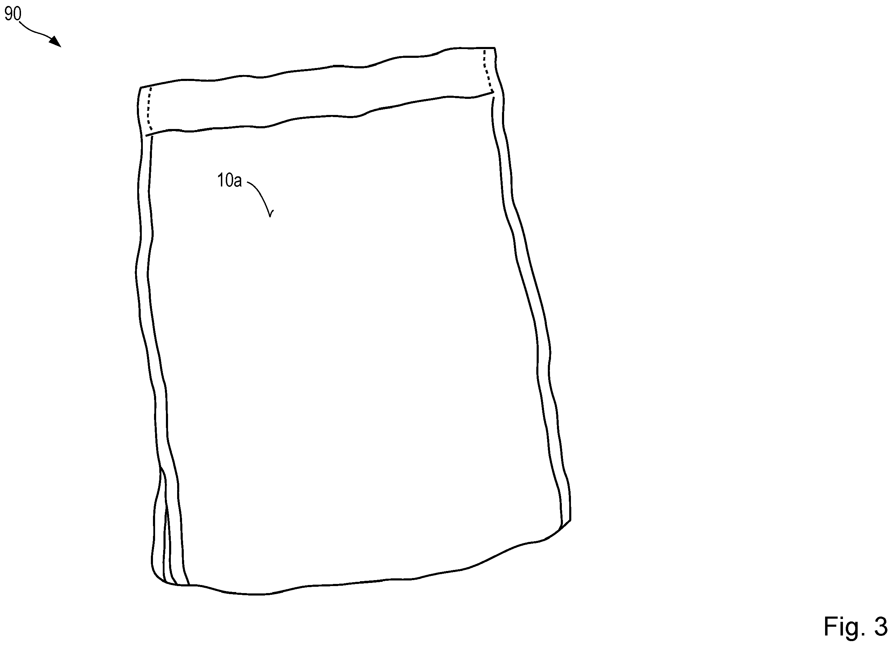

Zur Außenseite 10a der Verpackungslagenanordnung 10 im Sinne einer Außenseite 10a einer aus der Verpackungslagenanordnung 10 gebildeten Verpackung 90 (siehe Figur 3) weist die Verpackungslagenanordnung 10 im dargestellten Ausführungsbeispiel eine Lage 14 mit einem unmittelbar auf die Papierlage 12 aufgedruckten Druckfarbenauftrag auf. Mit dem Druckfarbenauftrag der Lage 14 kann die Verpackungslagenanordnung 10 und damit die aus ihr gebildete Verpackung 90 mit Produktinformationen über Herkunft oder/und Qualität oder/und Menge eines mit der Verpackungslagenanordnung 10 verpackten Produkts versehen werden.

In einer besonders einfachen Ausgestaltung der Verpackungslagenanordnung 10 kann die Lage 14 mit dem Druckfarbenauftrag entfallen. In einer einfachen Ausgestaltung kann die Lage 14 mit dem Druckfarbenauftrag eine außenliegende, also zur Umgebung der Verpackungslagenanordnung 10 hin freiliegende Lage sein.

In der Regel ist es jedoch gewünscht, den Druckfarbenauftrag dauerhaft möglichst in einer druckfrischen Qualität zu erhalten, da Verbraucher häufig aus dem optisch leicht wahrnehmbaren Eindruck der Verpackung auf die Qualität des damit verpackten Produkts schließen. Zum Schutz der Lage 14 mit dem Druckfarbenauftrag kann daher eine Schutzlage 16 über dem Druckfarbenauftrag angeordnet sein, welcher den Druckfarbenauftrag bedeckt. Die Schutzlage 16 kann einen Schutzlack umfassen, welcher nass aufgetragen wurde und anschließend getrocknet ist. Nass aufgetragener Schutzlack bildet im getrockneten Zustand eine dünnere Lage 16 als eine alternativ aufkaschierte Schutzfolie.

Die Schutzlage 16 aus Nitrozellulose, Polyurethan oder Polyester, um nur einige Materialbeispiele zu nennen, ist bevorzugt mit einem im einsatzbereiten getrockneten Zustand zu messenden Auftragsgewicht von 0,5 bis 2,0 g/m² aufgetragen. Die Schutzlage 16 bildet eine weitere Materiallage im Sinne der obigen Beschreibungseinleitung.

Auf der zur Außenseite 10a entgegengesetzten Innenseite 10b der Verpackungslagenanordnung 10 hinweisenden Seite der Papierlage 12 ist eine Wasserdampfbarrierelage 18 aufgetragen. Die Wasserdampfbarrierelage 18 kann beispielsweise aus einem Acrylcopolymer oder einem Polyester gebildet sein, beispielsweise mit einem Auftragsgewicht von 1 bis 3 g/m², wiederum gemessen im einsatzbereiten getrockneten Zustand.

Die Wasserdampfbarrierelage 18 ist bevorzugt nass aufgetragen und ist nach dem Auftrag getrocknet.

Auf die von der Papierlage 12 abgewandte Seite der Wasserdampfbarrierelage 18 ist eine Sauerstoffbarrierelage 20 nass aufgetragen, die nach ihrem Auftrag getrocknet ist. Die Sauerstoffbarrierelage 20, beispielsweise gebildet aus wasserunlöslichem Polyurethan, vorzugsweise gebildet aus wasserlöslichem PVOH oder EVOH, weist im einsatzbereiten getrockneten Zustand ein Auftragsgewicht im Bereich von 1 bis 5 g/m² auf.

Auf die von der Papierlage 12 und der Wasserdampfbarrierelage 18 abgewandte Seite der Sauerstoffbarrierelage 20 ist durch Vakuumabscheidung ("vacuum deposition") eine Metallisierungs-Barrierelagenanordnung 22 aufgetragen. Die Metallisierungs-Barrierelagenanordnung 22 weist eine optische Dichte von zwischen 2,0 und 4,0, bevorzugt von zwischen 2,2 und 2,8, besonders bevorzugt von 2,5 auf. Ihre Dicke beträgt im dargestellten Beispiel etwa 40 nm.

Mit der dargestellten Anordnung liegt die feuchtigkeitssensitive Sauerstoffbarrierelage 20 in Richtung einer zur Dickenrichtung der Verpackungslagenanordnung 10 parallelen Lagenfolge LF zwischen den als Wasserdampfbarriere wirkenden Lagen 18 und 22. Daher kann die Sauerstoffbarrierelage 20 beiderseits abgeschirmt von sie angreifender Feuchtigkeit über lange Zeit stabil bestehen und ihre Wirkung als Sauerstoffbarriere entfalten.

In der in Figur 1 dargestellten Lupenvergrößerung ist die Metallisierungs-Barrierelagenanordnung 22 im Detail dargestellt. Diese weist in dem dargestellten bevorzugten Ausführungsbeispiel eine zentrale dickere Metalllage 22a aus metallischem Aluminium auf, welche sich zwischen zwei dünneren Metalloxidlagen 22b und 22c aus Aluminiumoxid befindet. Auch die beiden Metalloxidlagen 22b und 22c sind nicht etwa natürlich gebildet, sondern wurden gezielt durch Vakuumabscheidung erzeugt. Jede der beiden Metalloxidlagen 22b und 22c weist eine Dicke von etwa 3 bis 4, vorzugsweise 3,5 nm auf, sodass die dazwischenliegende Metalllage 22a eine Dicke von etwa 32 bis 34 nm, vorzugsweise 33 nm aufweist.

Im Verbund weisen die Metalllage 22a und die sie beiderseits flankierenden Metalloxidlagen 22b und 22c bei der angezeigten geringen Dicke eine hervorragende Wasserdampfbarrierewirkung auf. Darüber hinaus schützen die beiden Metalloxidlagen 22b und 22c die zwischen ihnen gelegene Metalllage 22a vor einem oxidierenden Angriff der Umgebungsatmosphäre.

Auf der von der Papierlage 12 wegweisenden Seite der Metallisierungs-Barrierelagenanordnung 22 ist, beispielsweise durch Extrusion, eine Siegellage 24 aufgetragen, welche dafür sorgt, dass die Verpackungslagenanordnung 10 zumindest auf ihrer Innenseite 10b siegelfähig, insbesondere heißsiegelfähig ist. Die Siegellage 24 kann beispielsweise aus einem Polyolefin, also etwa aus Polyethylen oder Polypropylen, gebildet sein. Das Auftragsgewicht der Siegellage 24, gemessen im einsatzbereiten getrockneten Zustand, liegt vorzugsweise zwischen 2 und 10 g/m². Anstelle eines Polyolefins kann einer der in der Beschreibungseinleitung genannten Werkstoffe als Siegellage 24 bzw. als Decklage 24 ausgebildet sein. Die Siegellage 24 bildet eine Decklage im Sinne der obigen Beschreibungseinleitung. Bei Verwendung eines Bio-Polymers als Decklage beträgt deren Auftragsgewicht, gemessen im trockenen einsatzbereiten Zustand, 5,0 bis 30,0 g/m².

Die Decklage bzw. Siegellage 24 kann, je nach Materialwahl, die Barrierewirkung der Verpackungslagenanordnung 10 gegen Migration von Sauerstoff oder/und Wasserdampf weiter erhöhen.

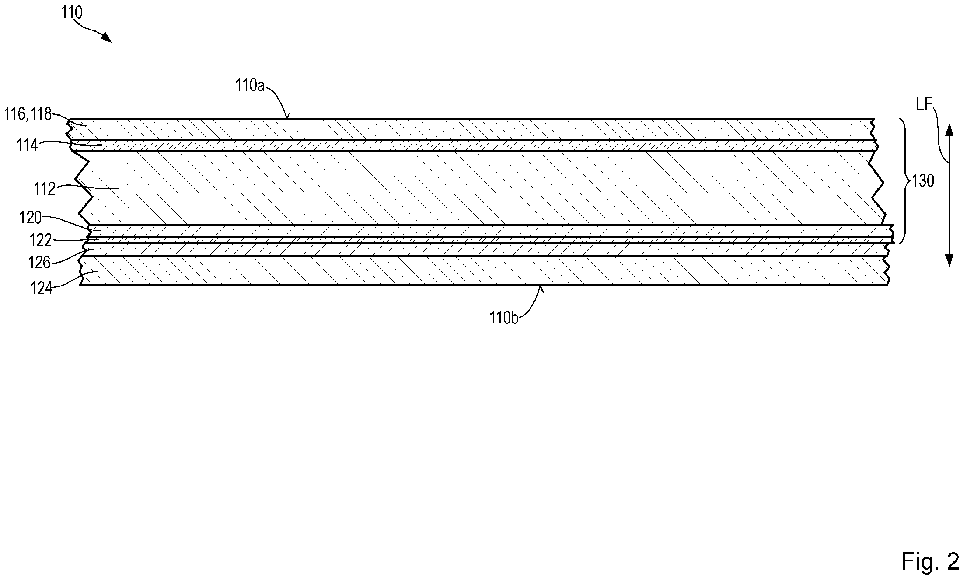

In Figur 2 sind gleiche und funktionsgleiche Bauteile und Bauteilabschnitte wie in Figur 1 mit gleichen Bezugszeichen versehen, jedoch erhöht um die Zahl 100. Die in Figur 2 dargestellte zweite Ausführungsform wird nachfolgend nur insofern beschrieben, als sie sich von der in Figur 1 dargestellten ersten Ausführungsform einer Verpackungslagenanordnung unterscheidet, auf deren Beschreibung ausdrücklich auch zur Erläuterung der zweiten Ausführungsform verwiesen wird.

In der zweiten Ausführungsform von Figur 2 ist die weitere Materiallage 116 durch die Wasserdampfbarrierelage 118 gebildet. Die Sauerstoffbarrierelage 120 liegt somit immer noch in Richtung der Lagenfolge LF zwischen der Wasserdampfbarrierelage 118 und der Metallisierungs-Barrierelagenanordnung 122, sodass die Sauerstoffbarrierelage 120 auch in der zweiten Ausführungsform zu beiden Seiten gegen Angriff von Feuchtigkeit abgeschirmt ist.

Optional kann die Verpackungslagenanordnung 110 - oder auch die Verpackungslagenanordnung 10 der ersten Ausführungsform - eine zweite Wasserdampfbarrierelage 126 aufweisen, welche bevorzugt unmittelbar auf die Metallisierungs-Barrierelagenanordnung 122 aufgetragen ist, um deren Barrierewirkung gegen Migration von Wasserdampf zu verstärken. Die zweite Wasserdampfbarrierelage 126, welche hinsichtlich der Art ihres Auftrags sowie ihres Materials und ihrer Auftragsstärke im Wesentlichen der Wasserdampfbarrierelage 118 entspricht, ist also bevorzugt zwischen der Metallisierungs-Barrierelagenanordnung 122 und der Decklage bzw. Siegellage 124 angeordnet.

In beiden Ausführungsformen ist die Sauerstoffbarrierelage 20 bzw. 120 wasserlöslich ausgebildet. Durch die beiderseitige Abschirmung der Sauerstoffbarrierelage 20 bzw. 120 durch die Wasserdampfbarrierelage 18 bzw. 118 und die Metallisierungs-Barrierelagenanordnung 22 bzw. 122 beeinträchtigt die Empfindlichkeit gegenüber Feuchtigkeit der Sauerstoffbarrierelage ihre Stabilität nicht. In einem Recycling-Prozess können die Lagen 18, 118, 22, 122 mit Barrierewirkung gegenüber Wasserdampf einem massiven Angriff von flüssigem Wasser nicht standhalten, sodass die Sauerstoffbarrierelage 20 bzw. 120 während eines Recyclings der Verpackungslagenanordnung 10 bzw. 110 aufgelöst werden kann. Dadurch können alle auf der von der Papierlage 12 bzw. 112 abgewandten Seite der Sauerstoffbarrierelage 20 bzw. 120 gelegenen Lagen einfach von der Papierlage 12 bzw. 112 entfernt und dem auf die Papierlage ausgerichteten Recycling-Prozess entzogen werden. Dies erhöht den Recyclingerfolg der Verpackungslagenanordnung 10 bzw. 110 erheblich.

Bevorzugt ist der Anteil des Gewichts der Papierlage 12 bzw. 112 am Gesamtgewicht eines Teillagenverbunds 30 bzw. 130, welche von der Außenseite 10a bzw. 110a der Verpackungslagenanordnung 10 bzw. 110 bis zu einschließlich der Metallisierungs-Barrierelagenanordnung 20 bzw. 120 reicht, mindestens 95 %. Besonders bevorzugt beträgt der Anteil des Gewichts der Papierlage 12 bzw. 112 am Gesamtgewicht der Verpackungslagenanordnung 10 bzw. 110 mindestens 95 %. Dadurch kann der Teillagenverbund 30 bzw. 130 oder sogar die gesamte Verpackungslagenanordnung 10 bzw. 110 als Monomaterial klassifiziert und recycelt werden.

In Figur 3 ist beispielhaft ein Verpackungsbeutel 90 gezeigt, welcher aus einer erfindungsgemäßen Verpackungslagenanordnung gebildet ist.

## Patentansprüche

1. Verpackungslagenanordnung (10; 110) zur Herstellung eines Verpackungsbehälters (90), wobei die Verpackungslagenanordnung (10; 110) umfasst:
- eine Papierlage (12; 112) als Trägerlage,
- eine Sauerstoffbarrierelage (20; 120) mit einer Sauerstofftransferrate von nicht mehr als 1,1 cm³/(m²·d·bar) gemäß DIN 53380-3, gemessen bei 23 °C und 50 % relativer Luftfeuchtigkeit,
- eine durch Vakuumabscheidung gebildete Metallisierungs-Barrierelagenanordnung (22; 122),
wobei die Verpackungslagenanordnung (10; 110) zusätzlich eine Wasserdampfbarrierelage (18; 118) mit einer Wasserdampftransferrate von nicht mehr als 1,1 g/(m²·d) gemäß DIN EN ISO 15106-3, gemessen bei 38 °C und 90 % relativer Luftfeuchtigkeit, derart aufweist, dass die Sauerstoffbarrierelage (20; 120) in der Lagenfolge (LF) zwischen der Wasserdampfbarrierelage (18; 118) und der Metallisierungs-Barrierelagenanordnung (22; 122) angeordnet ist.

2. Verpackungslagenanordnung (10; 110) nach Anspruch 1,
**dadurch gekennzeichnet, dass** die Metallisierungs-Barrierelagenanordnung (22; 122) unmittelbar auf die Sauerstoffbarrierelage (20; 122) abgeschieden ist.

3. Verpackungslagenanordnung (10; 110) nach Anspruch 1 oder 2,
**dadurch gekennzeichnet, dass** die Metallisierungs-Barrierelagenanordnung (22; 122) eine durch Vakuumabscheidung gebildete Metalllage (22a) aus einem metallischen Werkstoff, insbesondere umfassend Aluminium, oder/und eine durch Vakuumabscheidung gebildete Metalloxidlage (22b, 22c) aus einem Metalloxid aufweist.

4. Verpackungslagenanordnung (10; 110) nach einem der vorhergehenden Ansprüche,
**dadurch gekennzeichnet, dass** die Sauerstoffbarrierelage (20; 120) wasserlöslich ist.

5. Verpackungslagenanordnung (10; 110) nach einem der vorhergehenden Ansprüche,
**dadurch gekennzeichnet, dass** die Sauerstoffbarrierelage Vinylalkohol (20; 120) oder Polyurethan als Hauptbestandteil enthält oder aus Vinylalkohol oder Polyurethan besteht.

6. Verpackungslagenanordnung (10; 110) nach einem der vorhergehenden Ansprüche,
**dadurch gekennzeichnet, dass** die Sauerstoffbarrierelage (20; 120) als Primer-Beschichtung aufgetragen ist, vorzugsweise als Dispersion oder Lösung.

7. Verpackungslagenanordnung (10; 110) nach einem der vorhergehenden Ansprüche,
**dadurch gekennzeichnet, dass** die Wasserdampfbarrierelage (18; 118) ein Acrylcopolymer oder einen Polyester als Hauptbestandteil enthält oder aus einem Acrylcopolymer oder einem Polyester besteht.

8. Verpackungslagenanordnung (10; 110) nach einem der vorhergehenden Ansprüche,
**dadurch gekennzeichnet, dass** die Wasserdampfbarrierelage (18; 118) als Primer-Beschichtung aufgetragen ist, vorzugsweise als Dispersion oder Lösung.

9. Verpackungslagenanordnung (10) nach einem der vorhergehenden Ansprüche,
**dadurch gekennzeichnet, dass** die Wasserdampfbarrierelage (18), die Sauerstoffbarrierelage (20) und die Metallisierungs-Barrierelagenanordnung (22) auf derselben Seite der Papierlage (12) angeordnet sind.

10. Verpackungslagenanordnung (110) nach einem der Ansprüche 1 bis 8,
**dadurch gekennzeichnet, dass** die Papierlage (112) zwischen der Wasserdampfbarrierelage (118) und der Sauerstoffbarrierelage (120) angeordnet ist.

11. Verpackungslagenanordnung (10; 110) nach einem der vorhergehenden Ansprüche,
**dadurch gekennzeichnet, dass** die Verpackungslagenanordnung (10; 110) eine weitere, vorzugsweise mit einer Seite freiliegende, Materiallage (16; 116) aufweist, wobei die Papierlage (12; 112) zwischen der weiteren Materiallage (16; 116) und der Metallisierungs-Barrierelagenanordnung (22; 122) angeordnet ist.

12. Verpackungslagenanordnung (10; 110) nach Anspruch 11,
**dadurch gekennzeichnet, dass** die Papierlage (12; 112) bedruckt ist, wobei der Druckfarbenauftrag durch eine Schutzlackschicht (16; 116) als der weiteren Materiallage bedeckt ist.

13. Verpackungslagenanordnung (110) nach Anspruch 12,
**dadurch gekennzeichnet, dass** die Wasserdampfbarrierelage (118) die Schutzlackschicht (116) ist.

14. Verpackungslagenanordnung (10; 110) nach einem der vorhergehenden Ansprüche,
**dadurch gekennzeichnet, dass** die Verpackungslagenanordnung (10; 110) eine weitere, vorzugsweise mit einer Seite freiliegende, Decklage (24; 124) aufweist, wobei die Metallisierungs-Barrierelagenanordnung (22; 122) zwischen der Papierlage (12; 112) und der Decklage (24; 124) angeordnet ist.

15. Verpackungslagenanordnung (10; 110) nach einem der vorhergehenden Ansprüche,
**dadurch gekennzeichnet, dass** keine Lage (14, 16, 18, 20, 22, 24; 114, 116, 120, 122, 124, 126) der Verpackungslagenanordnung (10; 110) ein größeres Flächengewicht als die Papierlage (12; 112) aufweist, insbesondere, dass die Papierlage (12; 112) wenigstens in einem Teillagenverbund (30; 130) als einem Bezugslagenverbund, welcher von einer der Papierlage (12; 112) näher als der Metallisierungs-Barrierelagenanordnung (22; 122) gelegenen Außenseite (10a; 110a) der Verpackungslagenanordnung (10; 110) bis zur Metallisierungs-Barrierelagenanordnung (22; 122) reicht, vorzugsweise in der gesamten Verpackungslagenanordnung (10; 110) als dem Bezugslagenverbund, einen Anteil von wenigstens 95 Gew.-% am Gesamtgewicht des Bezugslagenverbunds aufweist.
